# EUROPEAN PATENT SPECIFICATION

(11) **EP 3 163 805 B1**
(45) Date of publication and mention of the grant of the patent: **27.03.2019**
(21) Application number: 16168095.4
(22) Date of filing: 03.05.2016
(51) Int. Cl.: H04L 12/28, H04N 21/63

(54) **METHOD AND DEVICE FOR PROCESSING INFORMATION**
VERFAHREN UND VORRICHTUNG ZUR INFORMATIONSVERARBEITUNG
PROCÉDÉ ET DISPOSITIF POUR LE TRAITEMENT D'INFORMATIONS

(30) Priority: 29.10.2015 CN 201510718289
(43) Date of publication of application: 03.05.2017
(73) Proprietor: Xiaomi Inc., Beijing 100085 (CN)
(72) Inventor: WU, Guizhou, Beijing 100085 (CN); JI, Hong, Beijing 100085 (CN); WEI, Xianzhe, Beijing 100085 (CN)
(74) Representative: Steinbauer, Florian

(56) References cited:
- US-A1- 2007 297 426
- US-A1- 2012 124 123
- US-A1- 2014 347 433
- US-A1- 2014 365 611
- US-A1- 2015 095 510
- US-A1- 2015 222 474

## Description

### TECHNICAL FIELD

The present disclosure generally relates to the communication technology, and more particularly, to a method and device for processing information.

### BACKGROUND

Wireless Fidelity display (WiFi-display) technology is used for real-time sharing of resources (such as pictures, videos, or music) between different User Equipment (UE) based on WiFi Direct. During such sharing, the resources can be transmitted, through a WiFi connection, from a sending terminal (hereinafter referred to as "Source end") to a receiving terminal (hereinafter referred to as "Sink end") for playing without requiring hardware connection. For example, by using the WiFi-display technology, videos currently played on a mobile phone can be simultaneously played on a large-screen television (TV).

In the current WiFi-display technology, after the Source end transmits resource data to be played to the Sink end, the Sink end directly plays the received resource data. Thus, the transmission and the playing of the resource data are not independent from each other. If the communication protocol adopted by the Source end and the Sink end for transmitting data changes, the transmitted data may not be played properly at the Sink end.

US 2014/0347433 A1 discloses methods, systems and devices for using a back channel for communicating in a Wi-Fi peer-to-peer remote display connection.

US 2012/0124123 A1 discloses that a web server receives from different client applications HTTP requests for the same webpage in which video content is to be embedded. The web server provides to each of the client applications an HTTP response to the HTTP request.

US 2014/0365611 A1 discloses systems and methods of communicating voice communication signals and video content over a WiFi ad hoc network and within the framework of Miracast/Wi-Fi Direct standards.

US 2015/0222474 A1 discloses that the subject system allows electronic devices in an infrastructure network to discover direct peer-to-peer services, such as screencasting, access to peripheral devices etc. that can be provided over the infrastructure network.

### SUMMARY

The present invention is defined in the appended independent claims to which reference should be made. Advantageous features are set out in the appended dependent claims.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a protocol hierarchy diagram, according to an exemplary embodiment;
Fig. 2 is a schematic diagram illustrating data transmission between a Source end and a Sink end;
Fig. 3 is a flowchart showing a method for processing information, according to an exemplary embodiment;
Fig. 4 is a flowchart showing S340 in Fig. 3;
Fig. 5 is another flowchart showing S340 in Fig. 3;
Fig. 6 is a flowchart showing S310 in Fig. 3;
Fig. 7 is a flowchart showing S350 in Fig. 3;
Fig. 8 is a schematic diagram illustrating a device for processing information, according to an exemplary embodiment;
Fig. 9 is a schematic diagram illustrating a player determining unit in Fig. 8;
Fig. 10 is another schematic diagram illustrating the player determining unit in Fig. 8;
Fig. 11 is a schematic diagram illustrating a request judging unit in Fig. 8;
Fig. 12 is a schematic diagram illustrating a media data playing unit in Fig. 8; and
Fig. 13 is a structure diagram of a terminal, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

In the operating system Android, version 4.2 developed by Google, a support for a WiFi Display (WFD) function is added, which causes the whole Android display architecture to change greatly. Miracast is a certification name provided by the WiFi Alliance for devices supporting the WFD function. The devices passing the Miracast certification support and are compatible to the WFD function to the utmost extent.

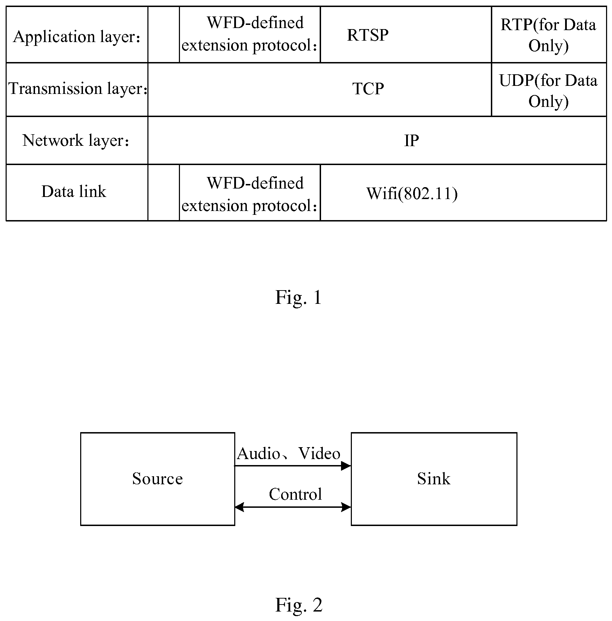

A core function of Miracast is making devices share video and audio data through a WiFi network. By taking a simple application scenario for example, with Miracast, the videos in a mobile phone can be delivered via WiFi to TV to display without hard wiring (e.g. a High Definition Multimedia Interface (HDMI)). In view of the current development trend of smart devices, the WFD function is very likely to help us to truly realize multi-screen interaction in a relatively short period of time. A WFD protocol extends WiFi and a Real Time Streaming Protocol (RTSP), defines a series of parameters and message types based on the RTSP, and performs the underlying transport through an Information Element customized function of WiFi. The protocol hierarchy is shown in Fig. 1.

As shown in Fig. 2, the WFD protocol specifies that there should be at least one Source device (the Source end) and one Sink device (the Sink end), which are called WFD Source and WFD Sink, wherein the Source device is the sending end, and the Sink device is the receiving end. How the Source end and the Sink end perform data interaction is briefly introduced below. Miracast manages interactions between two devices by sessions, and the main steps include (in order) that:
device discovery: a device supporting WiFi P2P nearby is searched for through the WiFi P2P;
device selection: after device A discovers device B, the device A needs to prompt a user, and the user may select whether to match with the device B as needed;
connection setup: a connection is established between the Source end and the display device of the Sink end through the WiFi P2P; according to a technical specification WiFi Direct, this step includes setting up a group owner and a client; after that, the two devices will established a Transmission Control Protocol (TCP) connection, meanwhile a port applied to the RTSP will be established for subsequent session management and control work; and
capability negotiation: before the video and audio data is transmitted formally, the Source device and the display device need to exchange some Miracast parameter information, such as the video format and the video format supported by both of them; only after they negotiate successfully, the following flow can be continued;
session establishment and streaming: after completing the previous step, the Source device and the display device will establish a Miracast Session, and then the video and audio data can be transmitted; the video and audio data of the Source end is transmitted to the display device through a Real-time Transport Protocol (RTP) after being encoded by Moving Picture Experts Group Transport Stream (MPEG2TS); the display device decodes the received data and displays the data finally.

However, in the above solution, an AndroidPackage (APK) layer is placed with Setting, and a middle layer is mixed with the WiFi P2P, which is not clear in view of the logic flow and is not convenient to decouple and maintain. Since the above solution can be divided into linking and playing in view of the whole flow, once a linking part changes, then the normal running of a playing part will be influenced. For example, if the existing WiFi P2P discovery protocol of the Source end is replaced, and a Universal Plug and Play (UPnP)/Microsoft Developer Network (MSDN) or a private discovery protocol is employed to discover a device, then the playing part may be unable to run normally because the underlying RTSP protocol remains unchanged.

Since the native Miracast solution mixes RTSP server linking with a WiFi P2P linking process, a playing flow is started immediately after the IP address and the port number of the Source end are obtained; considering the direct relation between playing and linking is only the IP address and the port number, for achieving independence between playing and linking, it is possible to send, by means of intent, the IP address and the port number to applications to perform subsequent operations. So, the information processing method and device provided by the embodiments of the present disclosure can decouple the linking part from the playing part, and make the playing part independent from the linking part without being influenced by the change of the linking part; the specific flow will be elaborated in the following embodiments.

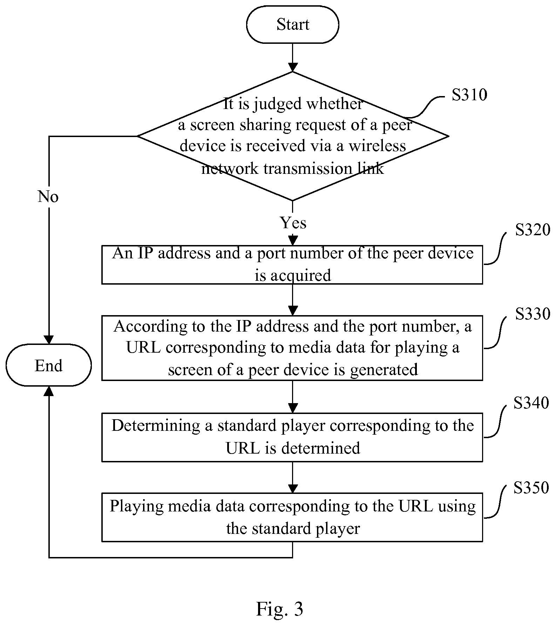

Aiming at the technical problems in related technologies, firstly a method for processing information is provided by an embodiment of the present disclosure, which is applied to the Sink end; as shown in Fig. 3, the method may include the following steps.

In step S310, whether a screen sharing request of a peer device is received via a wireless network transmission link is judged.

The Source end may use the WiFi P2P to look up a device supporting the WiFi P2P nearby, and may also use other protocols like the private discovery protocol to find a peer. When the Source end discovers the Sink end, the Source end and the Sink end will adopt a network transport protocol which is supported by both of them to established a communication connection; if the Source end needs to play media data at the Sink end in real time to realize the screen sharing, then the Source end will send the screen sharing request to the Sink end through the communication connection which has been established.

When the screen sharing request of the peer device is received, in step S320, the IP address and the port number of the peer device are obtained.

The IP address and the port number of the peer device are the IP address and the port number of the Source end.

In step S330, according to the IP address and the port number, a URL corresponding to media data for playing the screen of the peer device screen is generated;

The URL is generated according to the IP address and the port number of the Source end, and the format type of the URL can be wfd.

In step S340, a standard player corresponding to the URL is determined.

There may be two ways of determining the standard player corresponding to the URL, one of which is transforming the existing player to the standard player to make it support the format type corresponding to the URL, and the other of which is creating a standard player which supports the format type corresponding to the URL, so that the standard player can play the media data corresponding to the URL.

In step S350, the media data corresponding to the URL is played using the standard player.

After the standard player is determined, the media data corresponding to the URL may be played using the standard player, that is, the Sink end may play the media data transmitted by the Source end in real time.

With the information processing method provided by the embodiment of the present disclosure, when a screen sharing request sent by the sending end is received, the receiving end obtains the IP address and the port number of the sending end, and generates a URL; the receiving end determines a standard player corresponding to the URL according to the URL, and plays the media data through the obtained standard player. Since the standard player at the receiving end of the embodiment of the present disclosure is an independent standard player, even if the protocol adopted when the sending end and the receiving end exchange data changes, the standard player at the receiving end can still play the media data transmitted by the sending end normally.

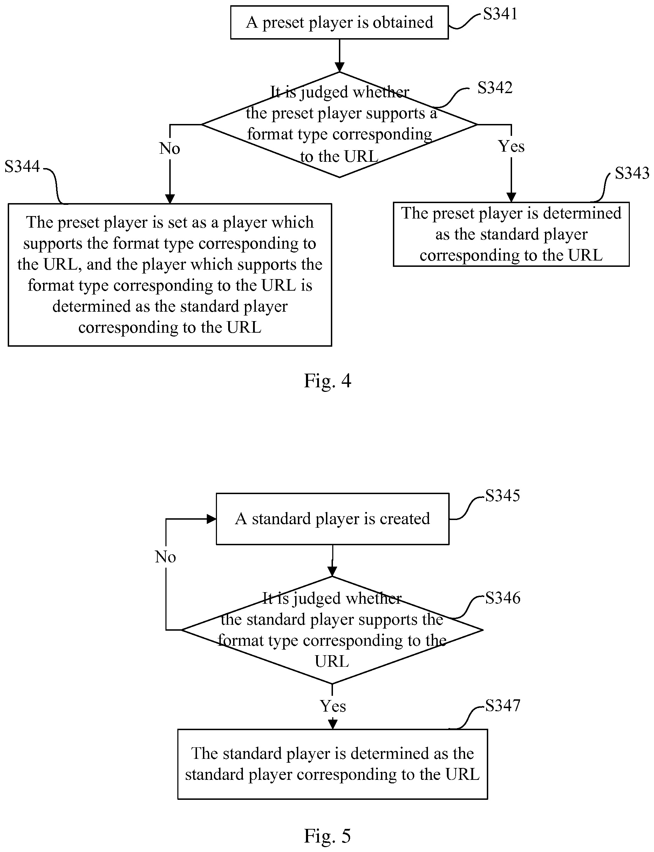

For determining the standard player corresponding to the URL and transforming the existing player, in another embodiment provided by the present disclosure, as shown in Fig. 4, the step S340 may also include the following steps based on Fig. 3.

In step S341, a preset player is obtained.

The preset player may be an existing player, and it is feasible to directly call the preset player.

In step S342, whether the preset player supports the format type corresponding to the URL is judged.

After the preset player is obtained, first of all, it is needed to judge whether the player supports the format corresponding o the URL. The URL may be of the format type wfd, for example, wfd://xxx URL.

When the preset player supports the format type corresponding to the URL, in step S343, the preset player is determined as a standard player corresponding to the URL.

If the preset player supports the format type corresponding to the URL, then the preset player may be directly used without being transformed. Because the existing player generally does not support the format type wfd://xxx URL currently, in this step, if the preset player supports the format type corresponding to the URL, then it may be considered that the preset player has been transformed, or it is a standard player created in advance. The preset player is determined as a standard player.

When the preset player does not support the format type corresponding to the URL, in step S344, the preset player is set as a player which supports the format type corresponding to the URL, and the player which supports the format type corresponding to the URL is determined as the standard player corresponding to the URL.

If the preset player does not support the format type corresponding to the URL, then it is needed to transform the existing preset player to make it support the format type corresponding to the URL, and determine the transformed preset player as the standard player.

Here, the way of obtaining the video and audio data based on a RTP sink and then starting, in TunnelRender, the player to play is feasible; since this way has a standard player entity and interface, it is only needed to disperse setup and setting of a surface and the like to corresponding interfaces in the MediaPlayerService architecture according to a uniform process. Besides, since this way is a framework played through a process WiFiDisplaySink->RTPReceiver->TunnelRenderer, a real player of the framework has been initiated in a TunnelRenderer object, and a playing flow is started by calling setDataSource (), setVideoSurfaceTexture (), start () and other function interfaces.

However, the problem in the above way is that linking and playing cannot be decoupled, the playing part is not independent, and it is expected that upper-layer applications automatically identify the playing type through the URL to create a playing flow, so it is needed to take the process of initiating the player into the MediaPlayerService class, which is specifically transforming a class member function setDataSource of MediaPlayerService to enable it to identify the URL of Miracast; here, the playing type is identified as Miracast by wfd://xxx, so as to be distinguished from other protocols to enable a bottom layer to create a correct playing flow; setVideoSurfaceTexture (), start () and the like of other flows are the same as that of a standard playing calling flow.

By transforming the existing player which does not support the format type corresponding to the URL to make it become the standard player which supports the format type corresponding to the URL, even if the data transmission protocol between the Source end and the Sink end changes, the real-time playing of the transmitted media data on the standard player is not influenced.

For determining the standard player corresponding to the URL and creating the standard player, in another embodiment provided by the present disclosure, as shown in Fig. 5, the step S340 may also include the following steps based on Fig. 3.

In step S345, a standard player is created.

Since there is basically no player which supports the format type corresponding to the URL currently, it is needed to create a standard player. The standard player has a standard interface and supports a typical standard flow of calling the player. The standard player supports the format type corresponding to the URL, for example, the format type wfd://xxx URL.

In step S346, whether the standard player supports the format type corresponding to the URL is judged.

After creating the standard player, it is also needed to verify the created standard player to judge whether the standard player supports the format type corresponding to the URL, so that the standard player can play the media data corresponding to the URL accurately.

When the standard player supports the format type corresponding to the URL, in step S347, the standard player is determined as a standard player corresponding to the URL.

If the standard player supports the format type corresponding to the URL, then the standard player can be determined as the standard player corresponding to the URL.

The standard player can be created based on a way of directly decoding the videos and audios to play from Mediareceiver to Directrender, which is specifically WiFiDisplaySink->MediaReceiver->DirectRenderer; although this way has a playing flow, but the flow is not uniform with the flow of the standard Android player; and the greatest disadvantage of this way is that the standard interfaces, such as setDataSource and setVideoSurfaceTexture, of the player base class MediaPlayerInterface are not realized, and for WiDi, it is unable to inform the applications to switch the resolutions timely when the Source end switches the resolutions, which causes that a mouse does not match a video; for solving these problems, by creating a player class which is named FakeMiracastPlayer, the new player class is transparent to an application layer, the application layer can call the flow of the standard MediaPlayer, the underlying implementation takes the original framework which plays a role of bridge, a top layer starts it through the format type wfd://xxx URL, and the bottom layer informs the application layer of occurrence of an event.

Besides, the FakeMiracastPlayer calls the original WiFiDisplay through the standard setDataSource interface, transmits the entity of a top layer player to the WiFiDisplay through a setListener interface, so that a message feedback in the WiFiDisplay can be obtained, and transmits, through setWfdSurface, the standard surface to the WiFiDisplay for encoding, decoding and displaying; in this way, the accordance of interfaces and flows is realized.

By creating a standard player which supports the format type corresponding to the URL, and verifying whether the standard player supports the format type corresponding to the URL after creating, if the standard player supports the format type corresponding to the URL, then even if the data transmission protocol between the Source end and the Sink end changes, the real-time playing of the transmitted media data on the standard player is not influenced.

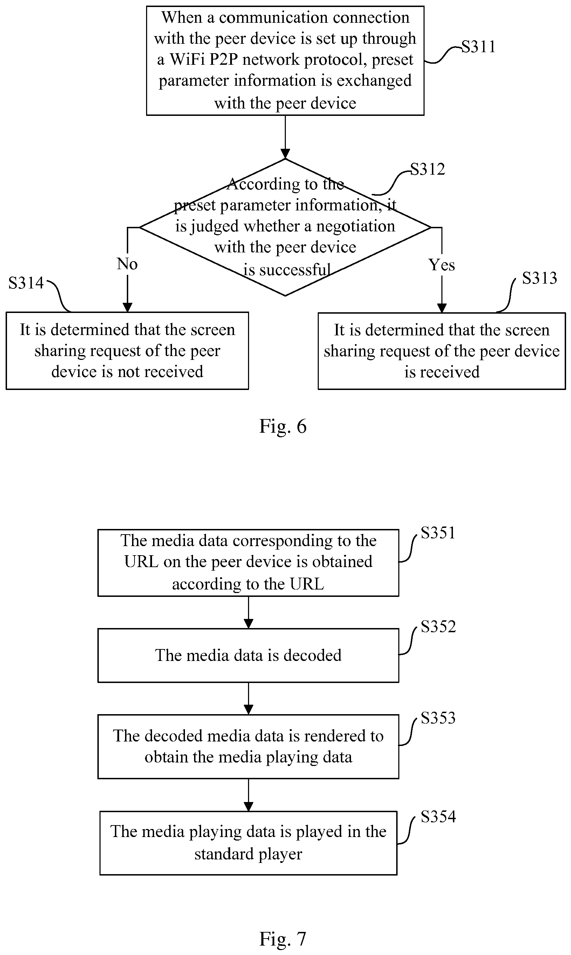

For determining whether the Sink end obtains the screen sharing request sent by the Source end, in another embodiment provided by the present disclosure, as shown in Fig. 6, the step S310 may also include the following steps based on Fig. 3.

In step S311, when the communication connection with the peer device is established through the WiFi P2P network protocol, the preset parameter information is exchanged with the peer device.

The preset parameter information here can be Miracast parameter information, such as the video/audio format supported by the Source end and the Sink end.

In step S312, according to the preset parameter information, it is judged whether the negotiation with the peer device is successful.

After the Source end and the Sink end exchange the preset parameter information, the two ends check the exchanged preset parameter information to judge whether the format is supported by their devices, namely whether they negotiate successfully.

When the negotiation with the peer device is successful, in step S313, it is determined that the screen sharing request of the peer device is received.

When the negotiation with the peer device is failed, in step S314, it is determined that the screen sharing request of the peer device is not received.

The two ends negotiate to judge whether the condition of data transmission is met, thereby avoiding the situation that when receiving the media data sent by the Source end, the Sink end cannot play the media data normally for the format and other reasons.

For determining how to play the media data after the standard player obtains the corresponding media data according to the URL, in another embodiment provided by the present disclosure, as shown in Fig. 7, the step S350 may also include the following steps based on Fig. 3.

In S351, the media data corresponding to the URL on the peer device is obtained according to the URL.

In S352, the media data is decoded.

In S353, the decoded media data is rendered to obtain the media playing data.

In S354, the media playing data is played in the standard player.

After the URL is obtained, the URL is parsed, and then the corresponding media data is obtained according to the parsed URL. For example, after the URL is parsed, the Source end transmits, through the established session, the real-time media stream (or the captured interface) to the Sink end in a TS manner, the Sink end encodes and de-multiplexes the media stream data (such as the audios and the videos), and then transmits the media stream data to the standard player to decode, render and play.

With the information processing method provided by the embodiment of the present disclosure, when a screen sharing request sent by the sending end is received, the receiving end obtains the IP address and the port number of the sending end, and generates a URL; the receiving end determines a standard player corresponding to the URL according to the URL, and plays the media data through the obtained standard player. Because the standard player at the receiving end of the present disclosure is an independent standard player, even if the protocol adopted when the sending end and the receiving end exchange data changes, the standard player at the receiving end can still play the media data transmitted by the sending end normally.

Two ways of determining the standard player are provided in the embodiments of the present disclosure; the standard player which is determined by the two ways can be independent and decoupled from the linking part, so that the standard player can not be influenced by the transmission protocol when playing the obtained media data, and the playing efficiency is improved greatly. In addition, the method presented in the solution unifies a standard APK interface, so it is able to conveniently adapt to such changes, and the problem that the video and the mouse can match under different resolutions can be solved.

Through the description of the above embodiments of the present disclosure, those skilled in the art can clearly understand that the embodiments of the present disclosure can be implemented by means of software plus a necessary general-purpose hardware platform; of course, the present disclosure can also be implemented by means of hardware; but the former is a better implementation mode in most cases. Based on such a understanding, the technical solutions of the embodiments of the present disclosure essentially or the part of the technical solutions contributing to the traditional art can be embodied in form of software product; the computer software product is stored in a storage medium, including a number of instructions for making a computer device (which can be a Personal Computer (PC), a server, or a network device and the like) perform all or part of the steps of the method in each embodiment. The above storage medium includes: a Read-Only Memory (ROM), a Random Access Memory (RAM), a magnetic disk or an optical disk, and other media which can store program codes.

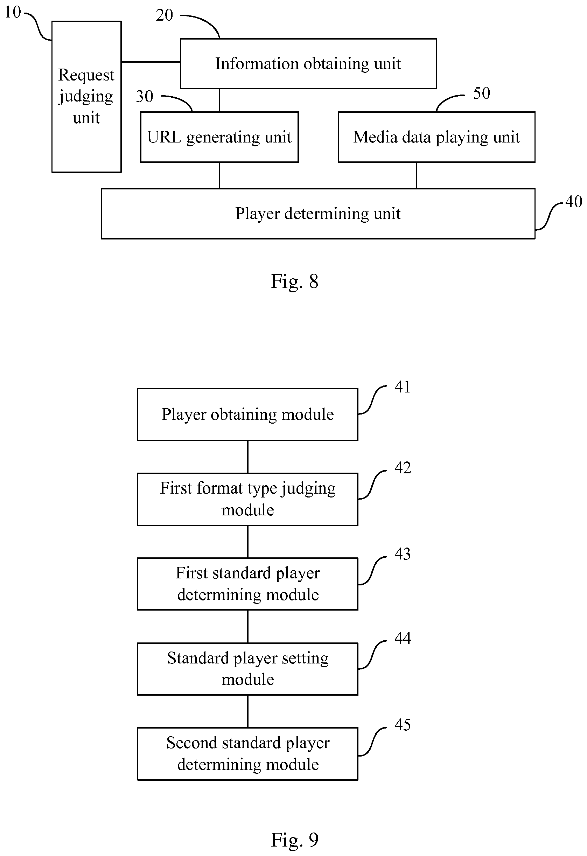

In addition, as the implementation of the above embodiments, an embodiment of the present disclosure also provide a device for processing information, which is in a terminal; as shown in Fig. 8, the device includes: a request judging unit 10, an information obtaining unit 20, a URL generating unit 30, a player determining unit 40 and a media data playing unit 50, wherein,
the request judging unit 10 is configured to judge whether a screen sharing request of a peer device is received via a wireless network transmission link;
the information obtaining unit 20 is configured to, when the screen sharing request of the peer device is received, obtain an IP address and a port number of the peer device;
the URL generating unit 30 is configured to, according to the IP address and the port number, generate a URL corresponding to media data for playing a screen of the peer device;
the player determining unit 40 is configured to determine a standard player corresponding to the URL; and
the media data playing unit 50 is configured to play the media data corresponding to the URL using the standard player.

In another example of the present disclosure, based on Fig. 8, as shown in Fig. 9, the player determining unit 40 includes: a player obtaining module 41, a first format type judging module 42, a first standard player determining module 43, a standard player setting module 44 and a second standard player determining module 45, wherein,
the player obtaining module 41 is configured to obtain a preset player;
the first format type judging module 42 is configured to judge whether the preset player supports a format type corresponding to the URL;
the first standard player determining module 43 is configured to, when the preset player supports the format type corresponding to the URL, determine the preset player as the standard player corresponding to the URL;
the standard player setting module 44 is configured to, when the preset player does not support the format type corresponding to the URL, set the preset player as a player which supports the format type corresponding to the URL; and
the second standard player determining module 45 is configured to determine the player which supports the format type corresponding to the URL as the standard player corresponding to the URL.

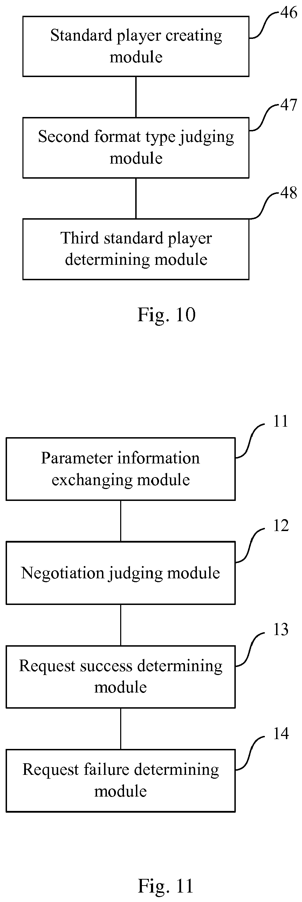

In another example of the present disclosure, based on Fig. 8, as shown in Fig. 10, the player determining unit 40 includes: a standard player creating module 46, a second format type judging module 47 and a third standard player determining module 48; wherein,
the standard player creating module 46 is configured to create the standard player;
the second format type judging module 47 is configured to judge whether the standard player supports the format type corresponding to the URL; and
the third standard player determining module 48 is configured to, when the standard player supports the format type corresponding to the URL, determine the standard player as the standard player corresponding to the URL.

In another example of the present disclosure, based on Fig. 8, as shown in Fig. 11, the request judging unit 10 includes: a parameter information exchanging module 11, a negotiation judging module 12, a request success determining module 13 and a request failure determining module 14; wherein,
the parameter information exchanging module 11 is configured to, when a communication connection with the peer device is established through a WiFi P2P network protocol, exchange preset parameter information with the peer device;
the negotiation judging module 12 is configured to judge whether the negotiation with the peer device is successful according to the preset parameter information;
the request success determining module 13 is configured to, when the negotiation with the peer device is successful, determine that the screen sharing request of the peer device is received; and
the request failure determining module 14 is configured to, when the negotiation with the peer device is failed, determine that the screen sharing request of the peer device is not received.

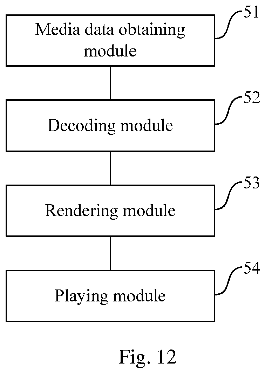

In another example of the present disclosure, based on Fig. 8, as shown in Fig. 12, the media data playing unit 50 includes: a media data obtaining module 51, a decoding module 52, a rendering module 53 and a playing module 54; wherein,
the media data obtaining module 51 is configured to obtain, according to the URL, the media data corresponding to the URL on the peer device;
the decoding module 52 is configured to decode the media data;
the rendering module 53 is configured to render the decoded media data to obtain the media playing data; and
the playing module 54 is configured to play the media playing data in the standard player.

With respect to the device in the above embodiments, the specific manners for individual modules to perform operations have been described in detail in the embodiments regarding the method, which will not be elaborated herein.

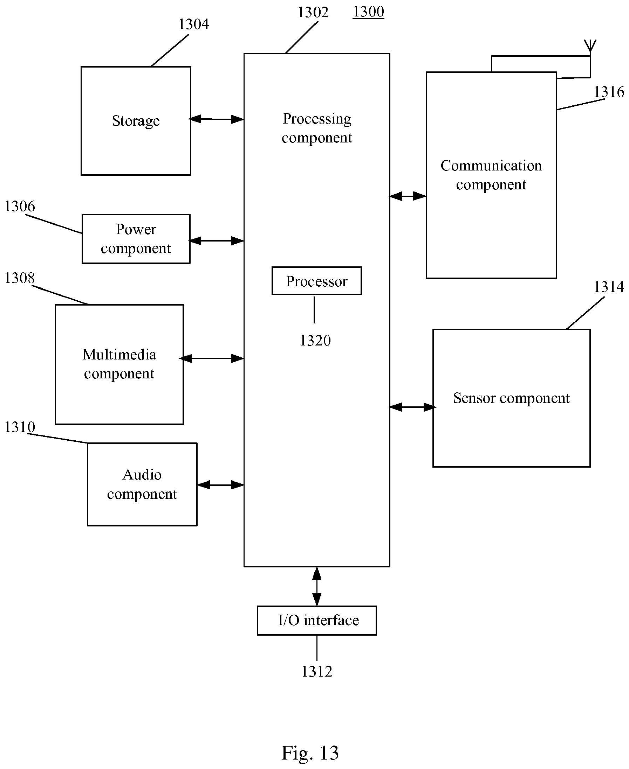

Fig. 13 is a structure diagram of a terminal 1300 for processing information, according to an exemplary embodiment. For example, the terminal 1300 may be a mobile phone, a computer, a digital broadcasting terminal, a message transceiver, a game console, a tablet device, medical equipment, fitness equipment, a personal digital assistant, and so on.

With reference to Fig. 13, the terminal 1300 may include one or more components as follows: a processing component 1302, a memory 1304, a power component 1306, a multimedia component 1308, an audio component 1310, an Input/Output (I/O) interface 1312, a sensor component 1314 and a communication component 1316.

Generally, the processing component 1302 controls the overall operations of the terminal 1300, such as the operations associated with display, phone calls, data communications, camera operations and recording operations. The processing component 1302 may include one or more than one processor 1320 to execute instructions to perform all or part of the steps of the above method. In addition, the processing component 1302 may include one or more modules to facilitate interaction between the processing component 1302 and other components. For example, the processing component 1302 may include a multimedia module to facilitate interaction between the multimedia component 1308 and the processing component 1302.

The memory 1304 is configured to store various types of data to support the operation of the terminal 1300. Examples of such data include instructions of any applications or methods operated on the terminal 1300, contact data, telephone directory data, messages, pictures, video, etc. The memory 1304 can be implemented using any type of volatile or non-volatile memory devices or a combination thereof, such as a Static Random Access Memory (SRAM), an Electrically Erasable Programmable Read-Only Memory (EEPROM), an Erasable Programmable Read-Only Memory (EPROM), a Programmable Read Only Memory (PROM), a Read Only Memory (ROM), a Magnetic Memory, a Flash Memory, a Magnetic Disk or an Optical Disk.

The power component 1306 provides power for each component of the terminal 1300. The power component 1306 may include a power management system, one or more power sources, and any other components associated with the generation, management, and distribution of power in the device 1300.

The multimedia component 1308 includes a screen which provides an output interface between the terminal 1300 and the user. In some embodiments, the screen may include a Liquid Crystal Display (LCD) and a Touch Panel (TP). If the screen includes the TP, then the screen may be implemented as a touch screen to receive an input signal from the user. The TP includes one or more touch sensors for sensing touches, swipes, and gestures on the touch panel. The touch sensor can not only sense a boundary of a touch or slide operation, but also detect duration and pressure related to the touch or slide operation. In some embodiments, the multimedia component 1308 includes a front camera and/or a rear camera. When the terminal 1300 is in an operation mode, e.g. a photographing mode or a video mode, the front camera and/or the rear camera may receive external multimedia data. Each of the front camera and rear camera can be a fixed-focus optical lens system or have a focal length and optical zoom capability.

The audio component 1310 is configured to output and/or input an audio signal. For example, the audio component 1310 includes a Microphone (MIC); when the terminal 1300 is in the operation mode, e.g. a calling mode, a recording mode and a voice recognition mode, the MIC is configured to receive an external audio signal. The received audio signal may be further stored in the memory 1304 or sent via the communication component 1316. In some embodiments, the audio component 1310 also includes a loudspeaker for outputting the audio signal.

The I/O interface 1312 provides an interface between the processing component 1302 and peripheral interface modules, such as a keyboard, a click wheel, buttons, etc. These buttons may include, but are not limited to, a home button, a volume button, a start button and a locking button.

The sensor component 1314 includes one or more sensors to provide status assessments of various aspects of the terminal 1300. For example, the sensor component 1314 can detect an open/close state of the terminal 1300 and relative positioning of components, for example, the components are a display and a keypad of the terminal 1300; the sensor component 1314 can also detect a position change of the terminal 1300 or a component of the terminal 1300, a presence or absence of contact between the user and the terminal 1300, an orientation or an acceleration/deceleration or the terminal 1300, and a temperature change of the terminal 1300. The sensor component 1314 may include a proximity sensor configured to detect the presence of nearby objects without any physical contact. The sensor component 1314 may also include an optical sensor, such as a Complementary Metal-Oxide Semiconductor (CMOS) or a Charge Coupled Device (CCD) image sensor, for use in imaging applications. In some embodiments, the sensor component 1314 may also include an acceleration sensor, a gyroscope sensor, a magnetic sensor, a pressure sensor or a temperature sensor.

The communication component 1316 is configured to facilitate wired or wireless communication between the terminal 1300 and other equipment. The terminal 1300 can access a wireless network based on a communication standard, such as WiFi, 2nd Generation (2G) or 3rd Generation (3G), or a combination thereof. In an exemplary embodiment, the communication component 1316 receives, via a broadcast channel, a broadcast signal or broadcast related information from an external broadcast management system. In an exemplary embodiment, the communication component 1316 also includes a Near Field Communication (NFC) module for facilitating short range communication. For example, the NFC module can be realized based on the Radio Frequency Identification (RFID) technology, the Infrared Data Association (IrDA) technology, the Ultra Wideband (UWB) technology, the Bluetooth (BT) technology and other technologies.

In an exemplary embodiment, the terminal 1300 may be implemented by one or more than one application specific integrated circuit (ASIC), Digital Signal Processor (DSP), Digital Signal Processing Device (DSPD), Programmable Logic Device (PLD), Field Programmable Gate Array (FPGA), controller, microcontroller, microprocessor or other electronic components, for performing the above method.

In an exemplary embodiment, a non-temporary computer-readable storage medium including instructions is also provided, e.g. the memory 1304 including instructions; the instructions can be executed by the processor 1320 of the terminal 1300 to complete the above method. For example, the non-temporary computer-readable storage medium can be a ROM, a Random Access Memory (RAM), a CD-ROM, a magnetic tape, a floppy disk, an optical data storage device, etc.

It is to be understood that the present disclosure can be applied to many general-purpose or dedicated computing system environments or configurations, such as a PC, a server computer, a handheld device or portable device, a tablet device, a multi-processor system, a microprocessor-based system, a set-top box, a programmable consumer electronic device, a network PC, a minicomputer, a mainframe computer, and a distributed computing environment including any above system or device.

The embodiments of the present disclosure may be described in the general context of computer-executable instructions which are executed by the computer, for example, a program module. Generally, the program module includes a routine, a program, an object, a component, a data structure and the like for performing a specific task or implementing a specific abstract data type. The present disclosure may also be practiced in the distributed computing environments; in these distributed computing environments, the task is performed by remote processing devices which are connected through a communication network. In the distributed computing environments, the program module may be located in the local and remote computer storage media which include the storage device.

Note that, in this application, the relational terms like "first" and "second" are only used for distinguishing an entity or operation from another entity or operation without necessarily requiring or implying that there is any actual relationship or order among these entities or operations. Besides, the terms "include", "comprise" or any other variant of them are intended to cover non-exclusive inclusion, so that processes, methods, articles or devices including a series of elements include not only those elements, but also other elements which are not listed definitely, or include elements intrinsic to them. When there is no more limit, the elements limited by the statement "include a ..." do not exclude other same elements existing in the processes, methods, articles or devices including the elements.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the embodiments of the present disclosure as come within known or customary practice in the art. It is intended that the specification and examples be considered as exemplary only, with a true scope of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for processing information, comprising:
Judging, by a sink device, whether a screen sharing request from a peer device is received via a wireless network transmission link (310);
when it is judged that the screen sharing request from the peer device is received, obtaining, by the sink device, an Internet Protocol, IP, address of the peer device and a port number for the Real Time Streaming Protocol, RTSP of the peer device (S320);
generating, by the sink device according to the IP address and the port number, a Uniform Resource Locator, URL, corresponding to media data that is used for playing screen content of the peer device (S330); the method further comprising:
determining, by the sink device, a standard player corresponding to the URL (S340); and
playing, by the sink device, the media data corresponding to the URL using the standard player (S350);
wherein the determining, by the sink device, the standard player corresponding to the URL comprises:
obtaining, by the sink device, a preset player (S341);
verifying, by the sink device, whether the preset player supports a format type of the URL (S342);
when the preset player supports the format type of the URL, determining, by the sink device, the preset player as the standard player corresponding to the URL (S343); and
when the preset player does not support the format type of the URL, setting, by the sink device, the preset player as a player which supports the format type of the URL; and determining, by the sink device, the player which supports the format type of the URL as the standard player corresponding to the URL (S344), wherein the setting, by the sink device, the preset player as a player which supports the format type of the URL comprises: transforming a class member function setDataSource of MediaPlayerService to identify the URL of a Miracast, so that a bottom layer creates a correct playing flow;
or wherein the determining, by the sink device, the standard player corresponding to the URL comprises:
creating, by the sink device, the standard player (S345), wherein the creating, by the sink device, the standard player comprises: creating a player class FakeMiracastPlayer which is transparent to an application layer, so that the application layer calls a flow of a standard MediaPlayer;
verifying, by the sink device, whether the standard player supports a format type of the URL (S346); and
when the standard player supports the format type of the URL, determining, by the sink device, the standard player as the standard player corresponding to the URL (S347).

2. The method of claim 1, wherein the judging, by the sink device, whether the screen sharing request of the peer device is received comprises:
when a communication connection with the peer device is established through a Wireless Fidelity Peer-to-Peer, WiFi P2P, network protocol, exchanging, by the sink device, preset parameter information with the peer device (S311);
judging, by the sink device, according to the preset parameter information, whether a negotiation with the peer device is successful (S312);
when the negotiation with the peer device is successful, determining, by the sink device, that the screen sharing request of the peer device is received (S313); and
when the negotiation with the peer device is failed, determining, by the sink device, that the screen sharing request of the peer device is not received (S314).

3. The method of any one of the claims 1-2, wherein the playing, by the sink device, the media data corresponding to the URL using the standard player comprises:
Obtaining, by the sink device, the media data corresponding to the URL from the peer device (S351);
Decoding, by the sink device, the media data (S352);
Rendering, by the sink device, the decoded media data to generate media playing data (S353); and
Playing, by the sink device, the media playing data using the standard player (S354).

4. A sink device for processing information, comprising:
a request judging unit (10), which is configured to judge whether a screen sharing request from a peer device is received via a wireless network transmission link;
an information obtaining unit(20), which is configured to, when the screen sharing request from the peer device is received, obtain an Internet Protocol, IP, address of the peer device and a port number for the Real Time Streaming Protocol, RTSP of the peer device;
a Uniform Resource Locator, URL, generating unit (30), which is configured to, according to the IP address and the port number, generate a URL corresponding to media data that is used for playing screen content of the peer device; the device further comprising:
a player determining unit (40), which is configured to determine a standard player corresponding to the URL; and
a media data playing unit (50), which is configured to play the media data corresponding to the URL using the standard player;
wherein the player determining unit comprises:
a player obtaining module (41), which is configured to obtain a preset player;
a first format type judging module (42), which is configured to verify whether the preset player supports a format type of the URL;
a first standard player determining module (43), which is configured to, when the preset player supports the format type of the URL, determine the preset player as the standard player corresponding to the URL;
a standard player setting module (44), which is configured to, when the preset player does not support the format type of the URL, set the preset player as a player which supports the format type of the URL; and
a second standard player determining module (45), which is configured to determine the player which supports the format type of the URL as the standard player corresponding to the URL;
the standard player setting module (44) is further configured to transform a class member function setDataSource of MediaPlayerService to identify the URL of a Miracast, so that a bottom layer creates a correct playing flow;
or wherein the player determining unit comprises:
a standard player creating module (46), which is configured to create the standard player;
a second format type judging module (47), which is configured to verify whether the standard player supports a format type of the URL; and
a third standard player determining module (48), which is configured to, when the standard player supports the format type of the URL, determine the standard player as the standard player corresponding to the URL;
the standard player creating module (46) is further configured to create a player class FakeMiracastPlayer which is transparent to an application layer, so that the application layer calls a flow of a standard MediaPlayer.

5. The sink device of claim 4, wherein the request judging unit comprises:
a parameter information exchanging module (11), which is configured to, when a communication connection with the peer device is established through a Wireless Fidelity Peer-to-Peer, WiFi P2P, network protocol, exchange preset parameter information with the peer device;
a negotiation judging module (12), which is configured to judge whether a negotiation with the peer device is successful according to the preset parameter information;
a request success determining module (13), which is configured to, when the negotiation with the peer device is successful, determine that the screen sharing request of the peer device is received; and
a request failure determining module (14), which is configured to, when the negotiation with the peer device is failed, determine that the screen sharing request of the peer device is not received.

6. The sink device of any one of claims 4-5, wherein the media data playing unit comprises:
a media data obtaining module (51), which is configured to obtain, according to the URL, the media data corresponding to the URL from the peer device;
a decoding module (52), which is configured to decode the media data;
a rendering module (53), which is configured to render the decoded media data to generate media playing data; and
a playing module (54), which is configured to play the media playing data using the standard player.

7. A terminal, comprising:
a processor; and
a storage, which is configured to store instructions executable by the processor;
wherein the processor is configured to perform all the steps of the method according to any one of claims 1 to 3.

8. A computer program comprising instructions which, when the program is executed by a computer, cause the computer to carry out all the steps of the method according to any of claims 1 to 3.

9. A computer-readable storage medium comprising instructions which, when executed by a computer, cause the computer to carry out all the steps of the method according to any of claims 1 to 3.

## Patentansprüche

1. Verfahren zur Verarbeitung von Informationen, umfassend:
Beurteilen, durch eine Senkvorrichtung, ob eine Bildschirmteilungsanforderung von einer Peer-Vorrichtung über eine drahtlose Netzwerkübertragungsverbindung (310) empfangen wird;
wenn beurteilt wird, dass die Bildschirmteilungsanforderung von der Peer-Vorrichtung empfangen wird,
Erhalten, durch die Senkvorrichtung, einer Internet-Protokolls-, IP, Adresse der Peer-Vorrichtung und einer Portnummer für das Real Time Streaming Protocol, RTSP, der Peer-Vorrichtung (S320);
Erzeugen, durch die Senkvorrichtung gemäß der IP-Adresse und der Portnummer, einer Uniform Resource Locator, URL, entsprechend den Mediendaten, die zum Abspielen von Bildschirminhalten der Peer-Vorrichtung (S330) verwendet wird;
wobei das Verfahren ferner umfasst:
Bestimmen, durch die Senkvorrichtung, eines Standard-Players, der der URL (S340) entspricht; und
Abspielen, durch die Senkvorrichtung, der Mediendaten, die der URL entsprechen, unter Verwendung des Standard-Players (S350);
wobei das Bestimmen, durch die Senkvorrichtung, des der URL entsprechenden Standard-Players umfasst:
Erhalten, durch die Senkvorrichtung, eines voreingestellten Players (S341);
Überprüfen, durch die Senkvorrichtung, ob der voreingestellte Player einen Formattyp der URL (S342) unterstützt;
wenn der voreingestellte Player den Formattyp der URL unterstützt, Bestimmen, durch die Senkvorrichtung, des voreingestellten Players als Standard-Player entsprechend der URL (S343); und
wenn der voreingestellte Player den Formattyp der URL nicht unterstützt, Einstellen, durch die Senkvorrichtung, des voreingestellten Players als Player, der den Formattyp der URL unterstützt; und Bestimmen, durch die Senkvorrichtung, des Players , der den Formattyp der URL als Standard-Player entsprechend der URL (S344) unterstützt, wobei die Einstellung, durch die Senkvorrichtung, des voreingestellten Players als Player, der den Formattyp der URL unterstützt, umfasst:
Transformieren einer Klassenmitgliedsfunktion setDataSource von MediaPlayerService, um die URL eines Miracasts zu identifizieren, so dass eine untere Schicht einen korrekten Wiedergabeablauf erzeugt;
oder wobei das Bestimmen, durch die Senkvorrichtung, des der URL entsprechenden Standard-Players umfasst:
Erzeugen, durch die Senkvorrichtung, des Standard-Players (S345), wobei das Erstellen des Standard-Players durch die Senkvorrichtung umfasst:
Erstellen eines Player-Klassen-FakeMiracastPlayers, der für eine Anwendungsebene transparent ist, so dass die Anwendungsebene einen Fluss eines Standard-MediaPlayers aufruft;
Überprüfen, durch die Senkvorrichtung, ob der Standard-Player einen Formattyp der URL (S346) unterstützt; und
wenn der Standard-Player den Formattyp der URL unterstützt, Bestimmen, durch die Senkvorrichtung, des Standard-Players als Standard-Player entsprechend der URL (S347).

2. Verfahren nach Anspruch 1, wobei das Beurteilen, durch die Senkvorrichtung, ob die Bildschirmteilungsanforderung der Peer-Vorrichtung empfangen wird, umfasst:
wenn eine Kommunikationsverbindung mit der Peer-Vorrichtung über ein Wireless Fidelity Peer-to-Peer, WiFi P2P, Netzwerkprotokoll hergestellt wird, Austausch, durch die Senkvorrichtung, von voreingestellten Parameterinformationen mit der Peer-Vorrichtung (S311);
Beurteilen, durch die Senkvorrichtung, gemäß den voreingestellten Parameterinformationen, ob eine Verhandlung mit der Peer-Vorrichtung erfolgreich ist (S312);
wenn die Verhandlung mit der Peer-Vorrichtung erfolgreich ist, Bestimmen, durch die Senkvorrichtung, dass die Bildschirmteilungsanforderung der Peer-Vorrichtung empfangen wird (S313); und
wenn die Verhandlung mit der Peer-Vorrichtung fehlgeschlagen ist, Bestimmen, durch die Senkvorrichtung, dass die Bildschirmteilungsanforderung der Peer-Vorrichtung nicht empfangen wird (S314).

3. Verfahren nach einem der Ansprüche 1-2, wobei das Abspielen, durch die Senkvorrichtung, der Mediendaten entsprechend der URL unter Verwendung des Standard-Players umfasst:
Erhalten, durch die Senkvorrichtung, der Mediendaten entsprechend der URL von der Peer-Vorrichtung (S351);
Dekodieren, durch die Senkvorrichtung, der Mediendaten (S352);
Wiedergeben, durch die Senkvorrichtung, der dekodierten Mediendaten zum Erzeugen von Medienwiedergabedaten (S353); und
Abspielen, durch die Senkvorrichtung, der Mediendaten mit dem Standard-Player (S354).

4. Senkvorrichtung zum Verarbeiten von Informationen, umfassend:
eine Anforderungsbeurteilungseinheit (10), die konfiguriert ist, um zu beurteilen, ob eine Bildschirmteilungsanforderung von einer Peer-Vorrichtung über eine drahtlose Netzwerkübertragungsverbindung empfangen wird;
eine Informationserfassungseinheit (20), die konfiguriert ist, um, wenn die Bildschirmteilungsanforderung von der Peer-Vorrichtung empfangen wird, eine Internet-Protokoll-, IP, Adresse der Peer-Vorrichtung und eine Portnummer für das Real Time Streaming Protocol, RTSP, der Peer-Vorrichtung zu erhalten;
eine Uniform Resource Locator-, URL-, Erzeugungseinheit (30), die konfiguriert ist, um gemäß der IP-Adresse und der Portnummer eine URL entsprechend der Mediendaten zu erzeugen, die zum Abspielen von Bildschirminhalten der Peer-Vorrichtung verwendet wird;
wobei die Vorrichtung ferner aufweist:
eine Player-Bestimmungseinheit (40), die konfiguriert ist, um einen Standard-Player entsprechend der URL zu bestimmen; und
eine Mediendatenwiedergabeeinheit (50), die konfiguriert ist, um die Mediendaten entsprechend der URL unter Verwendung des Standard-Players wiederzugeben;
wobei die Player-Bestimmungseinheit aufweist:
ein Player-Erfassungsmodul (41), das konfiguriert ist, um einen voreingestellten Player zu erhalten;
ein erstes Formattyp-Bewertungsmodul (42), das konfiguriert ist, um zu überprüfen, ob der voreingestellte Player einen Formattyp der URL unterstützt;
ein erstes Standard-Player-Bestimmungsmodul (43), das konfiguriert ist, um, wenn der voreingestellte Player den Formattyp der URL unterstützt, den voreingestellten Player als den Standard-Player entsprechend der URL zu bestimmen;
ein Standard-Player-Einstellmodul (44), das konfiguriert ist, um, wenn der voreingestellte Player den Formattyp der URL nicht unterstützt, den voreingestellten Player als einen Player einzustellen, der den Formattyp der URL unterstützt; und
ein zweites Standard-Player-Bestimmungsmodul (45), das konfiguriert ist, um den Player zu bestimmen, der den Formattyp der URL als Standard-Player entsprechend der URL unterstützt;
das Standard-Player-Einstellmodul (44) ferner konfiguriert ist, um eine Klassenmitgliederfunktion setDataSource des MediaPlayerService zu transformieren, um die URL eines Miracasts zu identifizieren, so dass eine untere Schicht einen korrekten Spielablauf erzeugt;
oder wobei die Player-Bestimmungseinheit aufweist:
ein Standard-Player-Erzeugungsmodul (46), das konfiguriert ist, um den Standard-Player zu erzeugen;
ein zweites Formattyp-Bewertungsmodul (47), das konfiguriert ist, um zu überprüfen, ob der Standard-Player einen Formattyp der URL unterstützt; und
ein drittes Standard-Player-Bestimmungsmodul (48), das konfiguriert ist, um, wenn der Standard-Player den Formattyp der URL unterstützt, den Standard-Player als Standard-Player entsprechend der URL zu bestimmen;
das Standard-Player-Erzeugungsmodul (46) ferner konfiguriert ist, um eine Playerklasse FakeMiracastPlayer zu erzeugen, die für eine Anwendungsschicht transparent ist, so dass die Anwendungsschicht einen Fluss eines Standard-MediaPlayers aufruft.

5. Senkvorrichtung nach Anspruch 4, wobei die Anforderungsbeurteilungseinheit aufweist:
ein Parameterinformationsaustauschmodul (11), das konfiguriert ist, um, wenn eine Kommunikationsverbindung mit der Peer-Vorrichtung über ein Wireless Fidelity Peer-to-Peer, WiFi P2P, Netzwerkprotokoll hergestellt wird, voreingestellte Parameterinformationen mit der Peer-Vorrichtung auszutauschen;
ein Verhandlungsbeurteilungsmodul (12), das konfiguriert ist, um zu beurteilen, ob eine Verhandlung mit der Peer-Vorrichtung gemäß den voreingestellten Parameterinformationen erfolgreich ist;
ein Anforderungserfolgsbestimmungsmodul (13), das konfiguriert ist, um, wenn die Verhandlung mit der Peer-Vorrichtung erfolgreich ist, zu bestimmen, dass die Bildschirmteilungsanforderung der Peer-Vorrichtung empfangen wird; und
ein Anforderungsausfallbestimmungsmodul (14), das konfiguriert ist, um, wenn die Verhandlung mit der Peer-Vorrichtung fehlgeschlagen ist, zu bestimmen, dass die Bildschirmteilungsanforderung der Peer-Vorrichtung nicht empfangen wird.

6. Senkvorrichtung nach einem der Ansprüche 4-5, wobei die Mediendatenwiedergabeeinheit aufweist:
ein Mediendatenerfassungsmodul (51), das konfiguriert ist, um gemäß der URL die Mediendaten zu erhalten, die der URL von der Peer-Vorrichtung entsprechen;
ein Dekodiermodul (52), das konfiguriert ist, um die Mediendaten zu dekodieren;
ein Rendermodul (53), das konfiguriert ist, um die dekodierten Mediendaten zu rendern, um Medienwiedergabedaten zu erzeugen; und
ein Wiedergabemodul (54), das konfiguriert ist, um die Wiedergabedaten der Medien unter Verwendung des Standard-Players wiederzugeben.

7. Terminal, aufweisend:
einen Prozessor; und
einen Speicher, der konfiguriert ist, um vom Prozessor ausführbare Anweisungen zu speichern;
wobei der Prozessor konfiguriert ist, um alle Schritte des Verfahrens nach einem der Ansprüche 1 bis 3 durchzuführen.

8. Computerprogramm, aufweisend Anweisungen, die, wenn das Programm von einem Computer ausgeführt wird, bewirken, dass der Computer alle Schritte des Verfahrens nach einem der Ansprüche 1 bis 3 ausführt.

9. Computerlesbares Speichermedium, aufweisend Anweisungen, die, wenn sie von einem Computer ausgeführt werden, bewirken, dass der Computer alle Schritte des Verfahrens nach einem der Ansprüche 1 bis 3 ausführt.

## Revendications

1. Procédé pour traiter des informations, comportant les étapes consistant à :
juger, par un dispositif destinataire, si une requête de partage d'écran provenant d'un dispositif homologue est reçue via une liaison de transmission de réseau sans fil (S310) ;
lorsqu'il est jugé que la requête de partage d'écran provenant du dispositif homologue est reçue, obtenir, par le dispositif destinataire, une adresse de protocole Internet, IP, du dispositif homologue et un numéro de port pour le protocole de diffusion en temps réel, RSTP, du dispositif homologue (S320) ;
générer, par le dispositif destinataire, en fonction de l'adresse IP et du numéro de port, un localisateur uniforme de ressources, URL, correspondant à des données de média qui est utilisé pour diffuser un contenu d'écran du dispositif homologue (S330) ; le procédé comportant en outre les étapes consistant à :
déterminer, par le dispositif destinataire, un lecteur standard correspondant à l'URL (S340) ; et
diffuser, par le dispositif destinataire, les données de média correspondant à l'URL en utilisant le lecteur standard (S350) ;
dans lequel la détermination, par le dispositif destinataire, du lecteur standard correspondant à l'URL comporte les étapes consistant à :
obtenir, par le dispositif destinataire, un lecteur prédéfini (S341) ;
vérifier, par le dispositif destinataire, si le lecteur prédéfini prend en charge un type de format de l'URL (S342) ;
lorsque le lecteur prédéfini prend en charge le type de format de l'URL, déterminer, par le dispositif destinataire, le lecteur prédéfini comme étant le lecteur standard correspondant à l'URL (S343) ; et
lorsque le lecteur prédéfini ne prend pas en charge le type de format de l'URL, définir, par le dispositif destinataire, le lecteur prédéfini comme étant un lecteur qui prend en charge le type de format de l'URL ; et déterminer, par le dispositif destinataire, le lecteur qui prend en charge le type de format de l'URL comme étant le lecteur standard correspondant à l'URL (S344), dans lequel la définition, par le dispositif destinataire, du lecteur prédéfini comme étant un lecteur qui prend en charge le type de format de l'URL comporte l'étape consistant à transformer une fonction d'élément de classe setDataSource de MediaPlayerService pour identifier l'URL d'un Miracast, de sorte qu'une couche inférieure crée un flux de diffusion correct ;
ou dans lequel la détermination, par le dispositif destinataire, du lecteur standard correspondant à l'URL comporte l'étape consistant à :
créer, par le dispositif destinataire, le lecteur standard (S345), dans lequel la création, par le dispositif destinataire, du lecteur standard comporte les étapes consistant à : créer une classe de lecteur FakeMiracastPlayer qui est transparente pour une couche d'application, de sorte que la couche d'application appelle un flux d'un MediaPlayer standard ;
vérifier, par le dispositif destinataire, si le lecteur standard prend en charge un type de format de l'URL (S346) ; et
lorsque le lecteur standard prend en charge le type de format de l'URL, déterminer, par le dispositif destinataire, le lecteur standard comme étant le lecteur standard correspondant à l'URL (S347).

2. Procédé selon la revendication 1, dans lequel le fait de juger, par le dispositif destinataire, si la requête de partage d'écran du dispositif homologue est reçue comporte les étapes consistant à :
lorsqu'une connexion de communication avec le dispositif homologue est établie via un protocole de réseau WiFi P2P (Wireless Fidelity Peer-to-Peer), échanger, par le dispositif destinataire, des informations de paramétrage prédéfinies avec le dispositif homologue (S311) ;
juger, par le dispositif destinataire, d'après les informations de paramétrage prédéfinies, si une négociation avec le dispositif homologue a réussi (S312) ;
lorsque la négociation avec le dispositif homologue a réussi, déterminer, par le dispositif destinataire, que la requête de partage d'écran du dispositif homologue est reçue (S313) ; et
lorsque la négociation avec le dispositif homologue a échoué, déterminer, par le dispositif destinataire, que la requête de partage d'écran du dispositif homologue n'est pas reçue (S314).

3. Procédé selon l'une quelconque des revendications 1 à 2, dans lequel la diffusion, par le dispositif destinataire, des données de média correspondant à l'URL en utilisant le lecteur standard comporte les étapes consistant à :
obtenir du dispositif homologue, par le dispositif destinataire, les données de média correspondant à l'URL (S351) ; décoder, par le dispositif destinataire, les données de média (S352) ;
afficher, par le dispositif destinataire, les données de média décodées pour générer des données de diffusion de média (S353) ; et
diffuser, par le dispositif destinataire, les données de diffusion de média en utilisant le lecteur standard (S354).

4. Dispositif destinataire destiné à traiter des informations, comportant :
une unité de jugement de requête (10), qui est configurée pour juger si une requête de partage d'écran provenant d'un dispositif homologue est reçue via une liaison de transmission de réseau sans fil ;
une unité d'obtention d'informations (20), qui est configurée pour, lorsque la requête de partage d'écran provenant du dispositif homologue est reçue, obtenir une adresse de protocole Internet, IP, du dispositif homologue et un numéro de port pour le protocole de diffusion en temps réel, RTSP, du dispositif homologue ;
une unité de génération de localisateur uniforme de ressources, URL (30), qui est configurée pour, d'après l'adresse IP et le numéro de port, générer un URL correspondant à des données de média qui sont utilisées pour diffuser un contenu d'écran du dispositif homologue, le dispositif comportant en outre :
une unité de détermination de lecteur (40), qui est configurée pour déterminer un lecteur standard correspondant à l'URL ; et
une unité de diffusion de données de média (50), qui est configurée pour diffuser les données de média correspondant à l'URL en utilisant le lecteur standard ;
dans lequel l'unité de détermination de lecteur comporte :
un module d'obtention de lecteur (41), qui est configuré pour obtenir un lecteur prédéfini ;
un premier module de jugement de type de format (42), qui est configuré pour vérifier si le lecteur prédéfini prend en charge un type de format de l'URL ;
un premier module de détermination de lecteur standard (43), qui est configuré pour, lorsque le lecteur prédéfini prend en charge le type de format de l'URL, déterminer le lecteur prédéfini comme étant le lecteur standard correspondant à l'URL ;
un module de définition de lecteur standard (44), qui est configuré pour, lorsque le lecteur prédéfini ne prend pas en charge le type de format de l'URL, définir le lecteur prédéfini comme étant un lecteur qui prend charge le type de format de l'URL ; et
un deuxième module de détermination de lecteur standard (45), qui est configuré pour déterminer le lecteur qui prend charge le type de format de l'URL comme étant le lecteur standard correspondant à l'URL ;
le module de définition de lecteur standard (44) est en outre configuré pour transformer une fonction d'élément de classe setDataSource de MediaPlayerSevice pour identifier l'URL d'un Miracast, de sorte qu'une couche inférieure crée un flux de diffusion correct ;
ou dans lequel l'unité de détermination de lecteur comporte :
un module de création de lecteur standard (46), qui est configuré pour créer le lecteur standard ;
un second module de jugement de type de format (47), qui est configuré pour vérifier si le lecteur standard prend en charge un type de format de l'URL ; et
un troisième module de détermination de lecteur standard (48), qui est configuré pour, lorsque le lecteur standard prend en charge le type de format de l'URL, déterminer le lecteur standard comme étant le lecteur standard correspondant à l'URL ;
le module de création de lecteur standard (46) est en outre configuré pour créer une classe de lecteur FakeMiracastPlayer qui est transparente pour une couche d'application, de telle sorte que la couche d'application appelle un flux d'un MediaPlayer standard.

5. Dispositif destinataire selon la revendication 4, dans lequel l'unité de jugement de requête comporte :
un module d'échange d'informations de paramétrage (11), qui est configuré pour, lorsqu'une connexion de communication avec le dispositif homologue est établie via un protocole de réseau WiFi P2P (Wireless Fidelity Peer-to-Peer), échanger des informations de paramétrage prédéfinies avec le dispositif homologue ;
un module de jugement de négociation (12), qui est configuré pour juger si une négociation avec le dispositif homologue est réussie d'après les informations de paramétrage prédéfinies ;
un module de détermination de succès de requête (13), qui est configuré pour, lorsque la négociation avec le dispositif homologue est réussie, déterminer que la requête de partage d'écran du dispositif homologue est reçue ; et
un module de détermination d'échec de requête (14), qui est configuré pour, lorsque la négociation avec ledit motif homologue a échoué, déterminer que la requête de partage d'écran du dispositif homologue n'est pas reçue.

6. Dispositif destinataire selon l'une quelconque des revendications 4 à 5, dans lequel l'unité de diffusion de données de média comporte :
un module d'obtention de données de média (51), qui est configuré pour obtenir du dispositif homologue, en fonction de l'URL, les données de média correspondant à l'URL ;
un module de décodage (52), qui est configuré pour décoder les données de média ;
un module d'affichage (53), qui configuré pour afficher les données de média décodées pour générer des données de diffusion de média ; et
un module de diffusion (54), qui est configuré pour diffuser les données de diffusion de média en utilisant le lecteur standard.

7. Terminal comportant :
un processeur ; et
un dispositif de stockage qui est configuré pour stocker des instructions exécutables par le processeur ;
dans lequel le processeur est configuré pour exécuter toutes les étapes du procédé selon l'une quelconque des revendications 1 à 3.

8. Programme informatique comportant des instructions qui, lorsque le programme est exécuté par un ordinateur, amènent l'ordinateur à exécuter toutes les étapes du procédé selon l'une quelconque des revendications 1 à 3.

9. Support de stockage lisible par ordinateur comportant des instructions qui, lorsqu'elles sont exécutées par un ordinateur, amènent l'ordinateur à exécuter toutes les étapes du procédé selon l'une quelconque des revendications 1 à 3.
